# EUROPEAN PATENT APPLICATION

(11) **EP 3 647 968 A1**
(43) Date of publication of application: **06.05.2020**
(21) Application number: 19206795.7
(22) Date of filing: 01.11.2019
(51) Int. Cl.: G06F 16/332, G06F 16/33, G06F 16/9535

(54) **SYSTEM AND METHOD FOR PERFORMING AN INTELLIGENT CROSS-DOMAIN SEARCH**

(30) Priority: 02.11.2018 US 201816179843
(71) Applicant: SoundHound, Inc., Santa Clara, CA 95054 (US)
(72) Inventor: ZHANG, Qindi, Santa Clara, 95054 (US); SONG, Qiaozhi, Santa Clara, 95054 (US)
(74) Representative: Smith, Jeremy Robert

(57) **Abstract**

The technology disclosed relates to performing a cross-lingual search. The cross-lingual search may include receiving a first query in a first language, translating the first query from the first language to a second language, to obtain a second query in the second language, performing a first search based on the first query to obtain first language results, performing a second search based on the second query to obtain second language results, translating the second language results to the first language, to obtain translated second results and outputting overall results including at least some of the first language results and some of the translated second results.

## Description

### FIELD OF TECHNOLOGY

The technology relates to audio and written search queries performed on the internet. In particular, the technology disclosed implements a cross-lingual and/or cross-domain internet search based on a single query directed to a single language or internet domain to provide corresponding search results from that originated in multiple languages and/or internet domains.

### BACKGROUND

The best information available on the internet for a particular search can, often times, be in a different language and/or domain than what is being searched by the user. Many internet users do not know that search results for a query will vary depending upon the language and/or domain in which the search was initiated. Conventionally, internet users initiate a search (e.g., submit a query) in their own native language and/or in an internet domain that corresponds to their current geographic location. Unfortunately, the best results can often be hiding in a language that is different than the initial search language and/or located in a different domain than what the user has the ability or knowledge to be able to search.

For example, a user may perform an internet search for information about "cherry blossoms," where the search is made using English and is made in an English (U.S.) domain (e.g., search is made on "google.com" for the English words "cherry blossoms"). The results of the search will be dependent upon what is available in English from the English domain. Information regarding "cherry blossoms" that is available in the Japanese language and/or in a Japanese domain will not be provided to the user, despite the fact that there is probably much more information regarding "cherry blossoms" in the Japanese language and/or in a Japanese domain, since cherry blossoms are a celebrated part of Japanese culture.

As another example, typical internet users do not know that results provided by "Wikipedia" are quite different when a user searches "wikipedia.org" (English domain) as compared to "jp.wikipedia.org" (Japanese domain). Specifically, the results from searching "cherry blossoms" in the English language from the English Wikipedia domain are quite different from the results from searching "cherry blossoms" in Japanese from the Japanese Wikipedia domain. The different results from the two different Wikipedia domains are not simply translations of one another. Rather, they contain different information regarding cherry blossoms. In other words, the result from the English domain is not simply a translation of the result from the Japanese domain, or visa-versa. The result from the Japanese domain is more likely to provide greater detail and to be from the perspective of the Japanese culture. The results, depending on the language and domain, will greatly vary and one particular result in a particular language or from a particular domain is likely better than other results from other languages and/or domains. The problem is that the typical internet user does not have the knowledge or the ability to determine how to get the best results from a search, because they do not know how to initiate searches using different languages and from different domains. Typically, users are limited to performing searches in their native language and/or in their default domain.

Therefore, an opportunity arises to develop a technology that can implement cross-lingual and cross-domain searches from a single intuitive interface that provides results in one language that are translated from searches conducted in multiple languages and in multiple domains. The technology disclosed provides such features, which, from the perspective of the user, allows for more efficient, accurate and helpful search results.

### SUMMARY

The technology disclosed addresses the above-described problems by providing a method of performing cross-lingual and/or cross-domain search. The method can include receiving a first query in a first language, translating the first query from the first language to a second language, to obtain a second query in the second language, performing a first search based on the first query to obtain first language results, performing a second search based on the second query to obtain second language results, translating the second language results to the first language, to obtain translated second results, and presenting integrated overall results including at least some of the first language results and some of the translated second results.

Further, the technology disclosed includes a non-transitory computer-readable recording medium having a computer program for performing a cross-lingual search recorded thereon. When the computer is executed on a computer including a processor and memory, the computer performs a method. The method can include receiving a first query in a first language, translating the first query from the first language to a second language, to obtain a second query in the second language, performing a first search based on the first query to obtain first language results, performing a second search based on the second query to obtain second language results, translating the second language results to the first language, to obtain translated second results, and presenting integrated overall results including at least some of the first language results and some of the translated second results.

The technology disclosed further includes a system including one or more processors coupled to memory, where the memory is loaded with computer instructions to perform a cross-lingual search. When the computer instructions are executed on the processors they implement actions including receiving a first query in a first language, translating the first query from the first language to a second language, to obtain a second query in the second language, performing a first search based on the first query to obtain first language results, performing a second search based on the second query to obtain second language results, translating the second language results to the first language, to obtain translated second results, and presenting integrated overall results including at least some of the first language results and some of the translated second results.

Particular aspects of the technology disclosed are described in the claims, specification, and drawings.

### BRIEF DESCRIPTION OF THE DRAWINGS

**FIG. 1** illustrates a conventional approach to performing an internet search.
**FIG. 2** illustrates an example implementation of the technology disclosed.
**FIG. 3** is an example illustration of a process performed by the technology disclosed to implement a cross-lingual and/or cross-domain search.
**FIG. 4** illustrates an example environment in which a cross-lingual and/or cross-domain search can be implemented by the technology disclosed.
**FIG. 5** is a block diagram of an example computer system that can implement various components of the environment of **FIG. 4****.**

### DETAILED DESCRIPTION

The following detailed description is made with reference to the figures. Example implementations are described to illustrate the technology disclosed, not to limit its scope, which is defined by the claims. Those of ordinary skill in the art will recognize a variety of equivalent variations on the description that follows.

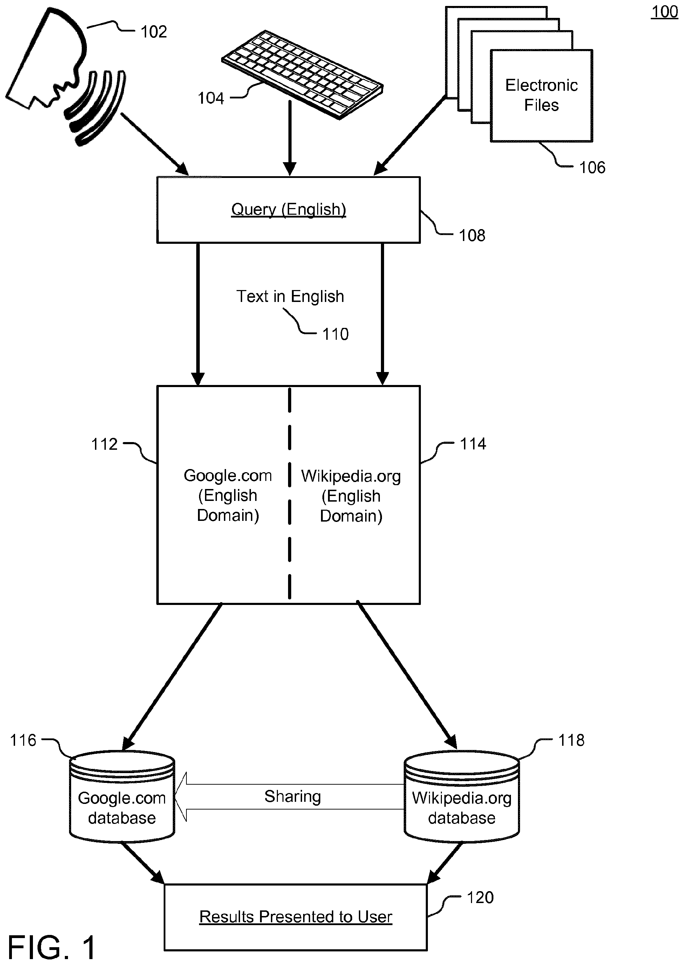

**FIG. 1** illustrates a conventional approach **100** to performing an internet search.

In particular, **FIG. 1** illustrates that the conventional approach **100** includes receiving a search or query request from one of a speech input **102** from a microphone or some other type of input device, a text input **104** from a keyboard or some other type of text input device or an electronic file or files **106**, which can include text compiled from other sources, etc. The information gathered from the speech input **102,** the text input **104** or the electronic file or files **106** is then processed to generate a query **108** in, for example, English. In this example, the query **108** is in English because the language spoken by the user in the speech input **102** is English from which an English transcription can be obtained, or because the input text **104** and/or the electronic file or files **106** contain English words.

The query **108**, which is either straight text received from the text input **104** or the electronic file or files **106** or a transcription from the speech input **102**, is then sent off to the (default) domain of the user. In other words, text in English **110** is provided as a keyword or keywords to a selected domain or a default domain of the user.

For general searches in English, a user's domain might be one of the well-known search engines, such as Google, Bing or Yahoo. In this illustrated conventional approach **100**, the text in English **110** is transmitted as the user's search or query to google.com **112** which is an English domain and/or to wikidpedia.org **114**, which is also an English domain. Typically, an internet searcher will conduct their first search using a general "catch-all" search engine, such as google.com **112.** If the user is not finding the desired results, the user may then transfer over to a more specialized domain, such as wikipedia.org **114.** Many more specialized domains that are available are known to a person of ordinary skill in the art of the present application.

For illustrative purposes, this example shows the user's search or query going to both the google.com **112** domain and the wikipedia.org **114** domain. Generally, a user will not simultaneously search two domains. However, as described below, one domain may share information with another domain. The submitted search terms are used by google.com **112** to query a google.com database **116.** Similarly, the search terms can be used by wikipedia.org **114** to query a wikipedia.org database **118.** It is common for the contents of the wikipedia.org database **118** to be shared with or accessed by the google.com database **116.** For example, a search on the google.com **112** domain can provide detailed results from information obtained from both the google.com database **116** and the wikipedia.org database **118**. This information is shared by the wikipedia.org database **118** so that the internet searcher can obtain some or all of the matching contents of the wikipedia.org database **118** from the search results provided from the google.com **112** domain. The results are integrated and presented to the user **120** in the form of a summary, where the user can then click-through or select other domains from which the search results originated.

A problem with this conventional approach **100**, as mentioned in the BACKGROUND section, is that the best results are not always found in the English language and/or an English domain.

Accordingly, the technology disclosed is capable of performing a cross-lingual and/or a cross-domain search based on a search initiated in a single language and/or in a single domain.

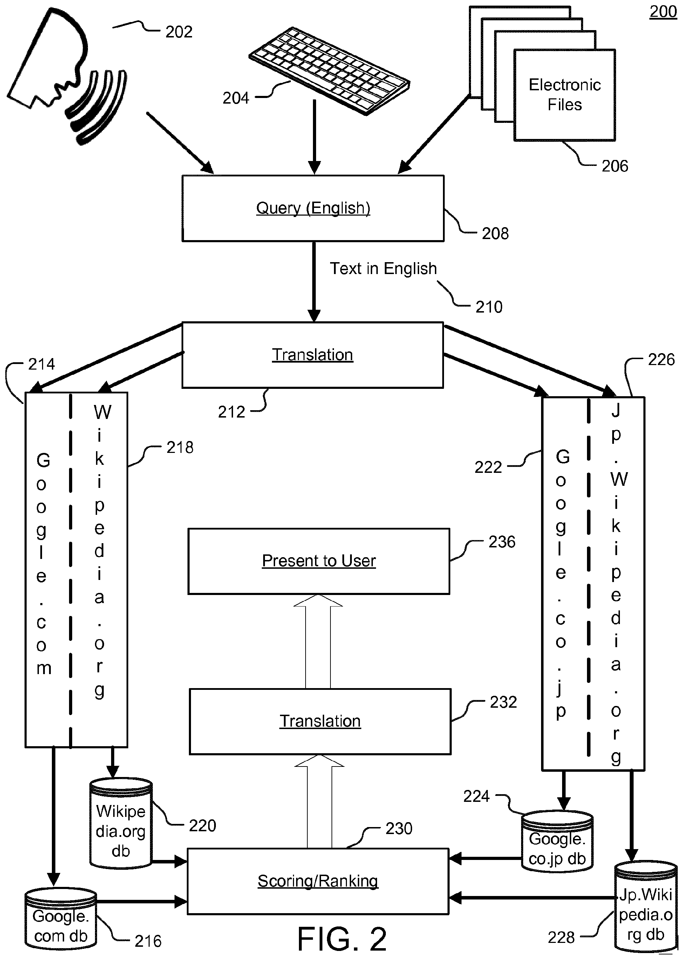

**FIG. 2** illustrates an example implementation **200** of the technology disclosed.

Similar to **FIG. 1**, **FIG. 2** illustrates receiving a search or query request from one of a speech input **202** from a microphone or some other type of input device, a text input **204** from a keyboard or some other type of text input device, or an electronic file or files **206,** which can include text compiled from other sources, etc. The information gathered from the speech input **202**, the text input **204** and the electronic file or files **206** is then processed to generate a query **208** in, for example, English. In this example, the query **208** is in English because the language spoken by the user in the speech input **202** is English from which an English transcription can be obtained, or because the input text **204** and/or the electronic file or files **206** contain English words.

The query **208**, which is either straight text received from the text input **204** or the electronic file or files **206** or a transcription from the speech input **202**, is then sent off as text in English **210** or, alternatively, as audio, for translation **212.** This is where **FIG. 2** differs from the single language/domain implementation of **FIG. 1****.** The technology disclosed varies from the conventional approach **100**, in that the query **208** in English is translated into at least one other language and is sent to at least one other domain.

Since the initial query **208** is in English, there is no need for a translation **212** to be performed in order for the text in English **210** to be sent to one or more English domains, such as google.com **214** and wikipedia.org **218.** These English domains are merely examples of some of the more popular English domains. A single English domain can be used, or multiple English domains can be searched by the technology disclosed. The technology disclosed can be configured to use one or more default domains, which can be pre-selected by the user. Additionally, domains can be automatically selected based on the subject matter of the search and the user can be given the option to add or remove domains. This example implementation **200** includes two English domains. However, just a single English domain can be used, or more than two English domains can be used. Similar to **FIG. 1**, **FIG. 2** illustrates that the search performed using the google.com **214** domain utilizes the google.com database **216** and that the search performed using wikipedia.org **218** utilizes the wikipedia.org database **220.**

The translation **212** can translate the text in English **210** to another language such as Japanese. The query **208** is in English is just for example's sake. The query **208** can be in Japanese and then the technology disclosed will translate the text into other languages and search other domains. The languages for translation **212** can be selected by the user at the time of the query, can be previously designated by the user, and/or can be intelligently selected based on the contents of the query. For example, the language or languages to translate into can be identified based on the subject matter of the search, based on past browser history of the user, or the historical use of other applications or programs.

Since, in this example, the query is translated to Japanese, the translated query is used to perform a search on Japanese domains, such as google.co.jp **222** and/or jp.wikipedia.org **226.** The search performed using google.co.jp **222** can utilize a google.co.jp database **224** and the search performed using jp.wikipedia.org **226** can utilize ajp.wikipedia.org database **228.** Just like the English domains, the jp.wikipedia.org database **228** can share information with the google.co.jp database **224.** The technology disclosed is not limited to just the original query language (i.e., English), English domains, the translated query language (i.e., Japanese) and Japanese domains. The original query can be any language combined with any domain or domains and the translated languages can include one or more languages that are different from the original language. The technology disclosed can implement one or more other domains other than the original domains that are used with the original language. The number of languages/domains can be preselected by the user or can be intelligently determined based on an analysis of the original query in the original language. For example, the original query in the original language could include keywords that trigger a high likelihood of relevant results being available in 3 different languages (e.g., Japanese, Chinese and Korean) and corresponding domains. The user can limit the number of alternate languages and/or domains that can be implemented by the technology disclosed.

Once the results are obtained from the corresponding searches performed using the google.com database **216**, the wikipedia.org database **220**, the google.co.jp database **224** and the jp.wikipedia.org database **228**, scoring and ranking **230** can be performed on the results. The scoring and ranking **230** can be performed in many different ways, some of which are described further in detail below. The scoring can be performed based on relevancy of the results or other factors, such as ratings of products being searched (e.g., restaurant dishes, etc.). The results can be scored and ranked individually so that the results from the English domain or domains are scored and ranked separately from the results from the Japanese domain or domains. This way the user is able to differentiate top results from each domain. The results can be scored based on their relevance to a particular topic that can be identified before the search is performed and/or that can be identified based on the results themselves. Alternatively, all of the results can be gathered, scored, ranked, ordered together and then presented to the user in a seamless, integrated manner so that the user does not need to concern themselves as to which languages or domains have been searched. The results can also be scored based on what is trending on other searches, popularity information, personal profile information, location of the user and/or related subject matter, as well as the time of the query. Weighting can also be implemented to assign higher weights to, for example, results that come from a language or domain that is more likely to be relevant (e.g., results for cherry blossoms would have a higher weight if they were in Japanese and/or came from a Japanese domain as opposed to results in Spanish coming from a Spanish domain).

An example of popularity information could be that a query is for the term "president." When a search is conducted on the Wikipedia domain, a click through rate for the search term "president" is the highest for an article about the U.S. President. This example popularity information indicates that the U.S. President has the highest popularity for the search term "president." This "high popularity" result can be incorporated into the scoring by giving results that include the current U.S. President a higher score.

The results from the Japanese domain or domains will most likely be in Japanese. Accordingly, a translation **232** is performed on all results that are in a language other than the original query language. The user can also have an option to translate all of the results into a different language (e.g., German) if, for some reason, a different language is preferred. After the translation **232,** the results are presented to the user **236.** Alternatively, the translation **232** can be performed before the scoring/ranking **230.**

The results can be presented to the user **236** in many different forms. For example, if the user is using a speech interface system in a vehicle, then a pre-configured relatively small number of results can be dictated back to the user or presented on a screen of the vehicle. The point is that when using a speech interface system, the user might not be able to easily or safely read all of the results. If the user does not like the initial listing of results, the user can then request the next set of the pre-configured number of results. In contrast, if the user is using a computer, tablet or smart phone, a pre-configured number of results will be provided to the user on their screen. This pre-configured number will probably be much greater than the pre-configured number for the speech interface system. For example, as mentioned above, the results can be separated from each other based on their original language(s) and/or domain(s) (e.g., English language/domain results can be separated from the Japanese language/domain results and then presented based on their scores and rankings).

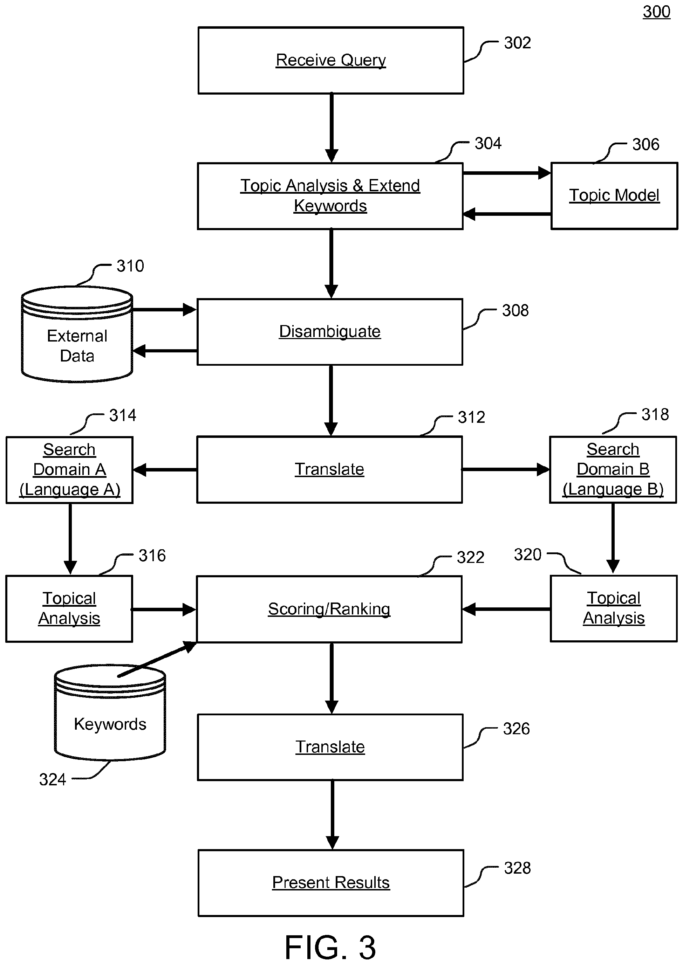

**FIG. 3** is an example illustration of a process **300** performed by the technology disclosed to implement a cross-lingual and/or cross-domain search.

Specifically, the process **300** illustrated in **FIG. 3** includes receiving the query in operation **302.** The receiving of the query is described in more detail above with reference to **FIG. 2****.** The process **300** can also include operation **304**, which includes performing an optional topic analysis and extending of keywords. As an example, the implementation illustrated in **FIG. 3**, will use an original query of "golden week" in English. The query is received in operation **302** and a topic analysis of "golden week" is performed in operation **304.** The topic analysis can implement a topic model **306** to assist in determining one or more topics that best align with the phrase "golden week." Artificial intelligence, such as deep learning and neural networks can be implemented to utilize the topic model **306** to identify one more topics that are related to the query. Alternatively, a word or phrase list can be used to identify topics. Other methods for performing the topic analysis will be clear to those skilled in the art.

Keeping with the "golden week" example, a topic analysis might find that "golden week" refers to a holiday or a week of holidays in both Japan and China. Based on this topic analysis, the technology disclosed can, in operation **304**, add the keyword "holiday" to the original query of "golden week." The user could be asked if they are referring to "golden week" in terms of a holiday or in terms of some other topic. With or without confirmation from the user, the keywords for the search can be extended to provide better results to the user. In the same manner, a user can be asked if a particular domain is an appropriate domain.

Optionally, operation **308** can be implemented to further disambiguate the original search terms "golden week" or the original search terms combined with the extended keyword as "golden week holiday" to further narrow the search that is going to be performed. Disambiguation refers to making the search terms more specific using, for example, external data 310 that can be obtained from other sources. For example, the technology disclosed can (i) identify previous searches and results viewed (clicked on) by the user or by other users that have previously searched "golden week" and/or "golden week holiday" (e.g. popularity results), (ii) obtain information from a personal profile of the user that can help add meaning to the original search, (iii) obtain information about upcoming travel plans that the user might have that can help add meaning to the original search and/or (iv) consider the date and/or time that the initial search was made to help add meaning to the original search.

Regarding the popularity results, an example of popularity could be that a query is for the term "golden week." When a search is conducted on the Wikipedia domain, a click through rate for the search term "golden week" is the highest for an article about Japanese golden week. This example popularity information indicates that the article about golden week in Japan has the highest popularity for the search term "golden week." This "high popularity" result can be used to update the search terms or keywords to include "golden week Japan" or "golden week holiday Japan."

The technology disclosed, might, for example, be able to determine from personal profile information and/or social media information that the user is going to travel to Japan next week, which happens to be the week of "golden week" in Japan. Such disambiguation can assist the technology disclosed to further limit the search to "golden week holiday Japan." Any disambiguation information that can be obtained can also be used to select which language or languages will be used to translate the original search.

In operation **312** the search terms are translated into one or more languages. As described with reference to **FIG. 2**, the language or languages for translation can be pre-selected by the user or intelligently selected based on the contents of the original query, as well as any further information obtained from optional operations **304** and/or **308**.

The translated search terms are used to perform searches in corresponding domains in operation **314** and operation **318**. Again, the technology disclosed can translate into many languages and implement searches in many different domains. For example, without the disambiguation operation **308** the technology disclosed might translate the search "golden week holiday" into both Japanese and Chinese and then perform searches in corresponding domains. Additionally, it is possible to perform a search in a Japanese domain using English, Chinese and Japanese. The Japanese domain need not necessarily be limited to only the Japanese language.

In operation **316** an optional topical analysis can be performed on the results of the search in operation **314**. This can be used to identify topical themes of the results and eventually lead to more accurate scoring of the results. For example, results that do not relate to the topic "holiday" can be scored lower than results that focus on a "holiday." Similarly, in operation **320** an optional topical analysis can be performed on the results of the search in operation **318**. After the results from the searches are obtained in operations **314**, **318** and the optional topical analysis is performed in operations **316**, **320**, the technology disclosed will score and rank the results in operation **322**. If the topical analysis is performed, the scoring and ranking can use the findings of the topical analysis to assign higher scores to results that are more consistent with the topical analysis. If the topical analysis is not performed, then the results can be scored based on the search terms used to start the search. Additional keywords **324** can be used to assist in the scoring of the results. For example, a database of synonyms and antonyms can be used to evaluate the relevancy of the search results. The scoring and ranking can also use popularity data, personal profile information and/or time, location, date information to evaluate, score and rank the results.

The results are translated back into the original language in operation **326** and then eventually presented to the user in operation **328**. As discussed above with reference to **FIG. 2**, the user may opt to have the results translated to a different language than the original language and the results can be presented to the user in many different ways, including visually or verbally.

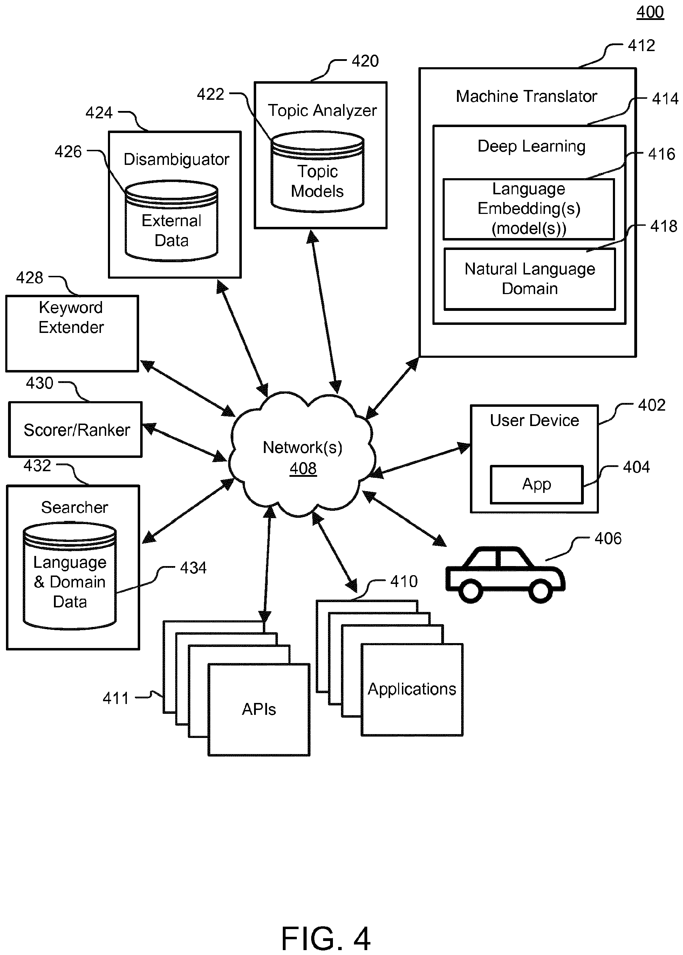

**FIG. 4** illustrates an example environment **400** in which a cross-lingual and/or cross-domain search can be implemented by the technology disclosed. The environment **400** includes at least one user device **402**, **406**. The user device **402** can be a mobile phone, tablet, workstation, desktop computer, laptop or any other type of user device running an application **404.** The user device **402** can be an automobile **406** or any other combination of hardware and software that is running an application **404**.

The user devices **402**, **406** are connected to one or more communication networks **408** that allow for communication between various components of the environment **400** and that allow for performing of searches on the internet or other networks. In one implementation, the communication networks **408** include the internet. The communication networks **408** also can utilize dedicated or private communication links that are not necessarily part of the public internet. In one implementation the communication networks **408** use standard communication technologies, protocols, and/or inter-process communication technologies. The user devices **402**, **406** are capable of receiving, for example, a first query in a first language, where the purpose of the query is to perform a search on the internet or a private network. The application **404** is implemented on the user devices **402**, **406** to capture the first query, whether it is speech input or text input.

The environment **400** also includes applications **410** that can be preinstalled on the user devices **402**, **406** or updated/installed on the user devices **402**, **406** over the communications networks **408**. Additionally, the environment **400** includes Application Programming Interfaces (APIs) **411** that can also be preinstalled on the user devices **402**, **406** or updated/installed on the user devices **402**, **406** over the communications networks **408.** The APIs **411** can be implemented to allow the user devices **402**, **406** and the applications **410** to easily gain access to other components on the environment **400** as well as certain private networks.

The environment **400** also includes a translator **412** that can be running on one or more platforms/servers that are part of a speech recognition system. The translator **412** can be a single computing device (e.g., a server), a cloud computing device, or it can be any combination of computing device, cloud computing devices, etc., that are capable of communicating with each other to perform the various tasks required to perform meaningful translation, as well as speech recognition, if desired. The translator **412** can include a deep learning system **414** that is capable of using artificial intelligence, neural networks, and or machine learning to translate one language into another language. The deep learning **414** can implement language embedding(s), such as a model or models **416** as well as a natural language domain **418** for providing domain-specific translations and interpretations for natural language processing (NLP).

Since the translator **412** can be spread over multiple servers and/or cloud computing device, the operations of the deep learning **414**, the language embedding(s) **416** and the natural language domains **418** can also be spread over multiple servers and/or cloud computing device. The applications **410** can be used by and/or in conjunction with the translator **412** to translate spoken input, as well as text input and text file input. Again, the various components of the environment **400** can communicate (exchange data) with each other using customized APIs **411** for security and efficiency.

The translator **412** is capable of translating the first query obtained from the user devices **402, 406** or any other type of user device, from the first language to a second language, to obtain a second query in the second language. The second language can be pre-selected by the user who input the first query, or the second language can be selected based on the content of the first query. The environment **400**, via the user devices **402**, **406**, can also ask the user to select the second language. The translator **412** is not limited to implementing only a second language. The first query can be translated into multiple languages (e.g., second, third, fourth languages, etc.). Virtually, there is no limit on the number of languages that the first query can be translated into.

The user devices **402**, **406** and the translator **412** can each include memory for storage of data and software applications, a processor for accessing data in executing applications, and components that facilitate communication over the communications networks **408**. The user devices **402, 406** execute applications **404**, such as web browsers (e.g., a web browser application **404** executing on the user device **402**), to allow developers to prepare and submit applications **410** and allow users to submit speech audio queries (e.g., the speech input **202** of **FIG. 2**) including natural language utterances and text queries (e.g., the text input **204** and/or the electronic text files **206** of **FIG. 2**) to be translated by the translator **412**.

As mentioned above, the translator **412** can implement one or more language embeddings (models) **416** from a repository of embeddings (models) (not illustrated) that are created and trained using the techniques that are known to a person of ordinary skill in the art. The language embeddings (models) **416** of the translator **412** can create the one or more translations (transcriptions) of the received speech input and/or the received text.

As also mentioned above, the natural language domain **416** can be implemented by the translator **412** in order to add context or real meaning to the translation (e.g., transcription) of the received speech input and/or text input.

The environment **400** can further include a topic analyzer **420** that can implement one or more topic models **422** to analyze, for example, the first query, to determine a topic of the first query that is in the first language. Some of the operations of the topic analyzer **420** are discussed above with reference to **FIG. 3** and operation **304** that performs topic analysis using the topic model **306.**

Furthermore, the environment **400** can include a disambiguator **424** that is able to utilize any type of external data **426** (e.g., disambiguation information) in order to add further meaning to an obtained query. Some of the operations of the disambiguator **424** are discussed above with reference to **FIG. 3** and operation **308** that disambiguates a received query. Essentially, the disambiguator **424** is able to add further meaning to a query by analyzing previous searches of the user, profile data of the user, social data of the user, popularity data of recent searches of the user as well as other internet searches, location information, calendar information, date and time information, etc. For example, the disambiguator **424** can be used to add additional keywords to the initial search that can be helpful to narrow the search to what the user is really wanting to find. The disambiguator **424** can also add additional limits to the search, such as certain dates and/or timeframes (e.g., based on the travel plans of the user additional limits can be added to the original query to identify events that are occurring while the user is traveling to a certain region).

The environment **400** can also include a keyword extender **428** that essentially adds keywords or phrases to the user's query in dependence upon any topics identified by the topic analyzer **420** and/or the disambiguator **424**. For example, if the first query in the first language obtained by one of the user devices **402**, **406** is "golden week," the topic analyzer **420** can analyze the first query and determine that the topic is "holiday." As previously mentioned, golden week is, at least, a Japanese holiday and a Chinese holiday. The disambiguator **424** can use the external data **426** to determine that the user has a vacation scheduled in Japan and that the user has had an increased number of searches for Kyoto, Japan in the last month. Accordingly, the keyword extender **428** can extend the terms of the first query from "golden week" to "golden week holiday Japan." In other words, the combination of the results obtained by the topic analyzer **420** and the disambiguator **424** can be used by the keyword extender **428** to essentially narrow the scope of the first query by adding additional keywords (e.g., filters). The topic analyzer **420**, the disambiguator **424** and the keyword extender **428** can perform the same operations on the second query in the second language as well as other queries translated into other languages. The keyword extender **428** can also use other mechanisms to extend the keywords of the received queries. This can be done by asking the user broad or specific questions regarding their initial query or can simply be done using artificial intelligence or other means to be able to further narrow the initial query.

Regardless of whether the topic analyzer **420**, the disambiguator **424** and/or the keyword extender **428** are implemented to change the scope of any of the queries, a searcher **432** of the environment **400** is implemented to perform a first search based on the first query to obtain first language results, to perform a second search based on the second query to obtain second language results, and to perform additional N searches based on N queries to obtain N language results (N being an integer). The searcher **432** can implement language and domain data **434** to determine which domains should be searched using which languages.

The searcher **432** can, for example, identify a first domain for the first query in dependence upon at least one of the first language and the topic of the first query, as determined by the topic analyzer **420.** The searcher **432** can, for example, further identify a second domain for the second query in dependence upon at least one of the second language and the topic of the first and/or second query. Turning to the "golden week" example, the searcher **432** may implement a first search in the English language in the domain "wikipedia.org" as "golden week holiday Japan" and implement a second search in the Japanese language in the domain "jp.wikipedia.org" as "golden week holiday Japan." The searcher **432** is not limited to searching just a single domain in the first language and a single domain in the second languages. The searcher **432** can search multiple domains in each language in parallel or in serial. For example, if an insufficient number of results are found after searching in the first domain in the first language, a second domain may be searched in the first language. The same goes for other domains in other languages.

In an implementation, the topic analyzer **420**, the disambiguator **424** and the keyword extender **428** can be implemented to update the contents of the received first query prior to the translation of the first query in the first language to the second query in the second language by the translator **212.** Alternatively, the topic analyzer **420,** the disambiguator **424** and the keyword extender **428** can be implemented to update the contents of the second query, the third query, etc. after the translator **212** translates the first query into other languages.

In another implementation, the technology disclosed can automatically determine the second language, as well as other languages to translate into, in dependence upon information gathered by the topic analyzer **420**, the disambiguator **424** and/or the keyword extender **428**.

After search results are obtained from the searcher **432**, a scorer/ranker **430** can be implemented to score and rank the results. The topic analyzer **420** can be implemented again to perform a topic analysis on the results. The results can then be filtered to throw out results that are not related to the topic of the queries. For example, the topic analyzer **420** might identify a certain number of results that are related to the Chinese golden week. These results might be thrown out or assigned a low score by the scorer/ranker **430** because the topic of the results is not related to the Japanese golden week. Alternatively, the scorer/ranker **430** can be programmed or modeled to allow a certain amount of exploration into topics that are different from an originally identified topic, while also capitalizing (exploiting) results that are identified to have topics that match the originally identified topic. A person of skill in the art will understand and recognize various exploration-exploitation models that can be implemented to exploit results that are likely to have matching topics as well as exploit other possibilities.

Just like the disambiguator **424**, the scorer/ranker **430** can use popularity data or information, personal profile information, social network information, location information, time and date information, etc. to score the results. As previously mentioned with reference to **FIGS. 2** and **3**, the scorer/ranker **430** can categorically assign scores based on domain(s) and/or language(s) or can score all of the results with respect to each other. Various scoring techniques can be implemented which will be understood by one of ordinary skill in the art. Further, the user may have the option to select various scoring and ranking techniques to be implemented. For example, the user may select to have scoring and ranking independently implemented (and presented) for each language/domain. This would result in the user receiving a score/rank for all of the English results in English domains and receiving a separate score/rank for all of the Japanese results in the Japanese domains. The scorer/ranker **430** may only present the top X results or a top Y percentage of results so as to not overwhelm the user. The values of X and Y can be dependent upon whether the user has submitted a speech input query or a text input query.

After the results are scored and ranked, the results that are in languages other than the first language can be translated back into the first language by the translator **412.** After translation, the results can be presented back to the user in various different forms, such as speech output and/or text output. Whether the results are presented in speech or text, the technology disclosed can also provide a brief visual or auditory summary of each result, making it easier for the user to determine which results they would like to view first.

The translator **412**, topic analyzer **420**, disambiguator **424**, keyword extender **428**, scorer/ranker **430** and/or the searcher **432** can be implemented using at least one hardware component and can also include firmware, or software running on hardware. Software that is combined with hardware to carry out the actions of the translator **412**, topic analyzer **420**, disambiguator **424**, keyword extender **428**, scorer/ranker **430** and/or the searcher **432** can be stored on computer readable media such as rotating or non-rotating memory. The non-rotating memory can be volatile or non-volatile. In this application, computer readable media does not include a transitory electromagnetic signal that is not stored in a memory; computer readable media stores program instructions for execution. The translator **412,** topic analyzer **420,** disambiguator **424,** keyword extender **428,** scorer/ranker **430** and/or the searcher **432,** as well as the applications **410**, the topic models, **422**, external data **426**, the language and domain data **434** and the APIs **411** can be wholly or partially hosted and/or executed in the cloud or by other entities connected through the communications network **408**.

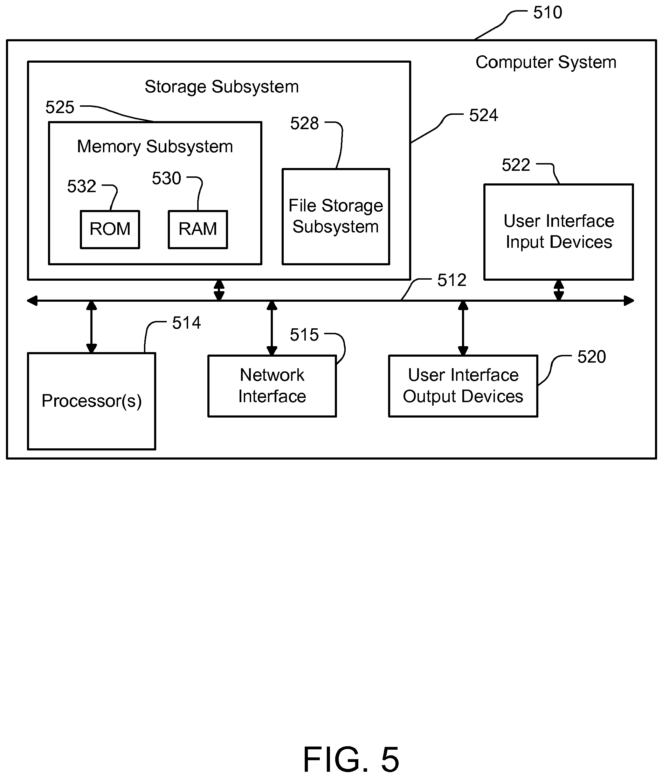

**FIG. 5** is a block diagram of an example computer system that can implement various components of the environment **400** of **FIG. 4**. Computer system **510** typically includes at least one processor **514,** which communicates with a number of peripheral devices via bus subsystem **512.** These peripheral devices may include a storage subsystem **524,** comprising for example memory devices and a file storage subsystem, user interface input devices **522**, user interface output devices **520**, and a network interface **515.** The input and output devices allow user interaction with computer system **510.** Network interface **515** provides an interface to outside networks, including an interface to the communication networks **408,** and is coupled via the communication networks **408** to corresponding interface devices in other computer systems.

User interface input devices **522** may include a keyboard, pointing devices such as a mouse, trackball, touchpad, or graphics tablet, a scanner, a touchscreen incorporated into the display, audio input devices such as speech recognition systems, microphones, and other types of input devices. In general, use of the term "input device" is intended to include all possible types of devices and ways to input information into computer system **510** or onto communication network **408.**

User interface output devices **520** may include a display subsystem, a printer, a fax machine, or non-visual displays such as audio output devices. The display subsystem may include a cathode ray tube (CRT), a flat-panel device such as a liquid crystal display (LCD), a projection device, or some other mechanism for creating a visible image. The display subsystem may also provide non-visual display such as via audio output devices. In general, use of the term "output device" is intended to include all possible types of devices and ways to output information from computer system **510** to the user or to another machine or computer system.

Storage subsystem **524** stores programming and data constructs that provide the functionality of some or all of the modules described herein. These software modules are generally executed by processor **514** alone or in combination with other processors.

Memory subsystem **525** used in the storage subsystem can include a number of memories including a main random-access memory (RAM) **530** for storage of instructions and data during program execution and a read only memory (ROM) **532** in which fixed instructions are stored. A file storage subsystem **528** can provide persistent storage for program and data files, and may include a hard disk drive, a floppy disk drive along with associated removable media, a CD-ROM drive, an optical drive, or removable media cartridges. The modules implementing the functionality of certain embodiments may be stored by file storage subsystem **528** in the storage subsystem **524**, or in other machines accessible by the processor.

Bus subsystem **512** provides a mechanism for letting the various components and subsystems of computer system **510** communicate with each other as intended. Although bus subsystem **512** is shown schematically as a single bus, alternative embodiments of the bus subsystem may use multiple busses.

Computer system **510** can be of varying types including a workstation, server, computing cluster, blade server, server farm, or any other data processing system or computing device. Due to the ever-changing nature of computers and networks, the description of computer system **510** depicted in **FIG. 5** is intended only as a specific example for purposes of illustrating the various embodiments. Many other configurations of computer system **510** are possible having more or fewer components than the computer system depicted in **FIG. 5**.

As used herein, a given event or value is "responsive" to a predecessor event or value if the predecessor event or value influenced the given event or value. If there is an intervening processing element, step or time period, the given event or value can still be "responsive" to the predecessor event or value. If the intervening processing element or step combines more than one event or value, the signal output of the processing element or step is considered "responsive" to *each* of the event or value inputs. If the given event or value is the same as the predecessor event or value, this is merely a degenerate case in which the given event or value is still considered to be "responsive" to the predecessor event or value. "Dependency" of a given event or value upon another event or value is defined similarly.

### Some Example Use Cases

In an example use case, the technology disclosed will allow the user to use a search engine and a translation filter. As an input, the user will say (or type) in English "cherry blossom event in Kyoto." The technology disclosed will perform an internet search with user keywords in English (e.g., "cherry blossom event in Kyoto"). The English search will also be translated into Japanese and a search of Japanese content will be performed using the translated search. The technology disclosed will then integrate search results from both the English sources and the Japanese sources and present the results to the user in the users' native language (e.g., English). Note that the results can be presented to the user in a different language if the user so desires.

In another example use case, the technology disclosed will build a custom natural language module for translated language understanding as natural language input. For example, as an input, the user will provide a speech input or a text input in English, while in a Spanish speaking country, "I want to eat lamb or beef." The technology disclosed an implement a translator or a personal assistant to translate the words "I want to eat lamb or beef' into the language of the local country (e.g., Spanish). The technology disclosed will then search for local restaurants that serve the lamb or beef dishes. The technology disclosed will then compare scores/rating on only these dishes to each other, rather than the overall scores/ratings of the restaurants. Then the technology disclosed can provide, as an output, a dish name in English with an image (when available) as well as restaurant location and overall review to users for selection. The user could then use the technology disclosed to pick a restaurant with the dish, make a reservation, provide directions and/or order the food in the native language.

In a further use case, the user can input in Chinese " 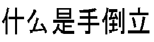 ?" ("handstand"). However, there is no Chinese Wikipedia article for "handstand." As a result, the technology disclosed will receive input in Chinese, translate the characters to the English word "handstand", and then search English "wikipedia.org" for "handstand." The technology disclosed will then extract the first sentence of the top result, "A handstand is the act of supporting the body in a stable, inverted vertical position by balancing on the hands." The technology disclosed can then translate the extracted first sentence to Chinese, " 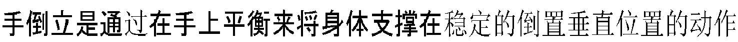 " and then give the user a Chinese language output explaining what a handstand is.

### Some Particular Implementations

We describe various implementations of performing a cross-lingual and cross-domain search.

The technology disclosed can be practiced as a system, method, or article of manufacture. One or more features of an implementation can be combined with the base implementation. Implementations that are not mutually exclusive are taught to be combinable. One or more features of an implementation can be combined with other implementations. This disclosure occasionally reminds the user of these options. Omission from some implementations of recitations that repeat these options should not be taken as limiting the combinations taught in the preceding sections - these recitations are hereby incorporated forward by reference into each of the following implementations.

A method of the technology disclosed performs the cross-lingual search by receiving a first query in a first language, translating the first query from the first language to a second language, to obtain a second query in the second language, performing a first search based on the first query to obtain first language results, performing a second search based on the second query to obtain second language results, translating the second language results to the first language, to obtain translated second results and presenting, to the user, integrated overall results including at least some of the first language results and some of the translated second results.

In an implementation, the method can perform a topic analysis on the first query to determine a topic of the first query. Additionally, the method may include identifying a first domain for the first query in dependence upon at least one of the first language and the determined topic and identifying a second domain for the second query in dependence upon at least one of the second language and the determined topic.

In an implementation, the user can filter the overall results according to the first domain and the second domain.

In a further implementation, the performing of the topic analysis can further include determining extended keywords to add to the first query in dependence upon the determined topic, and prior to the translating of the first query, updating the first query by adding the extended keywords to the first query. Additionally, in an implementation, the performing of the topic analysis can further include determining additional limits to add to the first query in dependence upon at least one of the determined topic and the extended keywords, and prior to the translating of the first query, further updating the first query by adding the additional limits to the first query.

In another implementation, the method can further include disambiguating the first query using disambiguation information, to obtain at least one of additional keywords and additional limits, and prior to the translating of the first query, further updating the first query by adding, to the first query, the at least one of the additional keywords and the additional limits.

Further, in an implementation, the second language can be automatically determined in dependence upon at least one of the determined topic and an analysis of the first query.

Additionally, in an implementation, the method can include prior to performing the translating of the second language results, scoring the first language results and the second language results, and ranking the first language results and the second language results based on the scoring.

In another implementation, the presenting of the overall results to the user includes providing only a top-ranked portion of the first language results and the second language results.

Furthermore, in an implementation, the method can further include performing a topic analysis on the first language results and the second language results, and the scoring of the first language results and the second language results is performed based on the topic analysis.

The technology disclosed can also be implemented as a system that includes one or more processors coupled to memory. The memory is loaded with computer instructions that cause the system to, when the computer instructions are executed, perform certain actions. Those actions can include receiving a first query in a first language, translating the first query from the first language to a second language, to obtain a second query in the second language, performing a first search based on the first query to obtain first language results, performing a second search based on the second query to obtain second language results, translating the second language results to the first language, to obtain translated second results, and presenting, to the user, integrated overall results including at least some of the first language results and some of the translated second results.

This system implementation and other systems disclosed optionally include one or more of the following features. The system can also include features described in connection with methods disclosed. In the interest of conciseness, alternative combinations of system features are not individually enumerated. Features applicable to systems, methods, and articles of manufacture are not repeated for each statutory class set of base features. The reader will understand how features identified in this section can readily be combined with base features in other statutory classes.

Other implementations may include a non-transitory computer readable storage medium storing instructions executable by a processor to perform functions of the system described above.

Computer readable media (CRM) implementations of the technology disclosed include a non-transitory computer readable storage medium impressed with computer program instructions, when executed on a processor, implement the methods described above.

Each of the features discussed in this particular implementation section for the first system implementation applies equally to the CRM implementation. As indicated above, all the system features are not repeated here and should be considered repeated by reference.

The disclosure comprises the following items:
1. A method of performing cross-lingual search, the method comprising:
   receiving a first query in a first language;
   translating the first query from the first language to a second language, to obtain a second query in the second language;
   performing a first search based on the first query to obtain first language results;
   performing a second search based on the second query to obtain second language results;
   translating the second language results to the first language, to obtain translated second results; and
   presenting, to a user, integrated overall results including one or more of the first language results and one or more of the translated second results.
2. The method of item 1, further comprising performing a topic analysis on the first query to determine a topic of the first query.
3. The method of item 2, further comprising:
   identifying a first domain for the first query in dependence upon at least one of the first language and the determined topic; and
   identifying a second domain for the second query in dependence upon at least one of the second language and the determined topic.
4. The method of item 3, wherein the user is able to filter the overall results according to the first domain and the second domain.
5. The method of item 2, wherein the performing of the topic analysis further includes:
   determining extended keywords to add to the first query in dependence upon the determined topic; and
   prior to the translating of the first query, updating the first query by adding the extended keywords to the first query.
6. The method of item 5, wherein the performing of the topic analysis further includes:
   determining additional limits to add to the first query in dependence upon at least one of the determined topic and the extended keywords; and
   prior to the translating of the first query, further updating the first query by adding the additional limits to the first query.
7. The method of item 5, further comprising:
   disambiguating the first query using disambiguation information, to obtain at least one of additional keywords and additional limits; and
   prior to the translating of the first query, further updating the first query by adding, to the first query, the at least one of the additional keywords and the additional limits.
8. The method of item 2, wherein the second language is automatically determined in dependence upon at least one of the determined topic and an analysis of the first query.
9. The method of item 1, further comprising:
   prior to performing the translating of the second language results, scoring the first language results and the second language results; and
   ranking the first language results and the second language results based on the scoring.
10. The method of item 9, wherein the presenting of the overall results includes providing only a top-ranked portion of the first language results and the second language results.
11. The method of item 9, wherein:
   the method further comprises performing a topic analysis on the first language results and the second language results; and
   the scoring of the first language results and the second language results is performed based on the topic analysis.
12. A non-transitory computer-readable recording medium having a computer program for performing a cross-lingual search recorded thereon, the computer program, when executed on a computer including a processor and memory, causing the computer to perform a method comprising:
   receiving a first query in a first language;
   translating the first query from the first language to a second language, to obtain a second query in the second language;
   performing a first search based on the first query to obtain first language results;
   performing a second search based on the second query to obtain second language results;
   translating the second language results to the first language, to obtain translated second results; and
   presenting, to a user, integrated overall results including one or more of the first language results and one or more of the translated second results.
13. The non-transitory computer-readable recording medium of item 12, further comprising performing a topic analysis on the first query to determine a topic of the first query.
14. The non-transitory computer-readable recording medium of item 13, further comprising:
   identifying a first domain for the first query in dependence upon at least one of the first language and the determined topic; and
   identifying a second domain for the second query in dependence upon at least one of the second language and the determined topic.
15. The non-transitory computer-readable recording medium of item 14, wherein the user is able to filter the overall results according to the first domain and the second domain.
16. The non-transitory computer-readable recording medium of item 13, wherein the second language is automatically determined in dependence upon at least one of the determined topic and an analysis of the first query.
17. A system including one or more processors coupled to memory, the memory loaded with computer instructions to perform a cross-lingual search, the computer instructions, when executed on the processors, implement actions comprising:
   receiving a first query in a first language;
   translating the first query from the first language to a second language, to obtain a second query in the second language;
   performing a first search based on the first query to obtain first language results;
   performing a second search based on the second query to obtain second language results;
   translating the second language results to the first language, to obtain translated second results; and
   presenting, to a user, integrated overall results including one or more of the first language results and one or more of the translated second results.
18. The system of item 17, wherein the actions further comprise performing a topic analysis on the first query to determine a topic of the first query.
19. The system of item 18, further comprising:
   identifying a first domain for the first query in dependence upon at least one of the first language and the determined topic; and
   identifying a second domain for the second query in dependence upon at least one of the second language and the determined topic.
20. The system of item 19, wherein the user is able to filter the overall results according to the first domain and the second domain.

## Claims

1. A computer-implemented method of performing cross-lingual search, the method comprising:
receiving an audio signal comprising a speech input in a first language;
applying speech recognition to the audio signal to derive a natural language expression corresponding to the speech input in the first language;
analysing the natural language expression to identify a first query in the first language;
translating the first query from the first language to a second language, to obtain a second query in the second language;
performing a first search based on the first query to obtain first language results;
performing a second search based on the second query to obtain second language results;
translating the second language results to the first language, to obtain translated second results; and
causing a display of integrated overall results including one or more of the first language results and one or more of the translated second results.

2. The method of claim 1, further comprising performing a topic analysis on the first query to determine a topic of the first query.

3. The method of claim 2, further comprising:
identifying a first domain for the first query in dependence upon at least one of the first language and the determined topic; and
identifying a second domain for the second query in dependence upon at least one of the second language and the determined topic.

4. The method of claim 3, wherein the user is able to filter the overall results according to the first domain and the second domain.

5. The method of any one of claims 2 to 4, wherein the performing of the topic analysis further includes:
determining extended keywords to add to the first query in dependence upon the determined topic; and
prior to the translating of the first query, updating the first query by adding the extended keywords to the first query.

6. The method of claim 5, wherein the performing of the topic analysis further includes:
determining additional limits to add to the first query in dependence upon at least one of the determined topic and the extended keywords; and
prior to the translating of the first query, further updating the first query by adding the additional limits to the first query.

7. The method of claim 5 or 6, further comprising:
disambiguating the first query using disambiguation information, to obtain at least one of additional keywords and additional limits; and
prior to the translating of the first query, further updating the first query by adding, to the first query, the at least one of the additional keywords and the additional limits.

8. The method of any one of claims 2 to 7, wherein the second language is automatically determined in dependence upon at least one of the determined topic and an analysis of the first query.

9. The method of any one of claims 1 to 8, further comprising:
prior to performing the translating of the second language results, scoring the first language results and the second language results; and
ranking the first language results and the second language results based on the scoring.

10. The method of claim 9, wherein causing the display of the integrated overall results includes providing only a top-ranked portion of the first language results and the second language results.

11. The method of claim 9 or 10, wherein:
the method further comprises performing a topic analysis on the first language results and the second language results; and
the scoring of the first language results and the second language results is performed based on the topic analysis.

12. A computer-readable medium comprising a computer program which, when executed by one or more processors of a computer, causes the computer to perform the method of any one of claims 1 to 11.
